Europäisches Patentamt

European Patent Office

Office européen des brevets

(11) Veröffentlichungsnummer: **0 143 896**
**B1**

(12) **EUROPÄISCHE PATENTSCHRIFT**

(51) Int. Cl. ⁵: **H 04 N 7/167, H 04 K 1/02**

(45) Veröffentlichungstag der Patentschrifft:
07.02.90

(21) Anmeldenummer: **84109792.6**

(22) Anmeldetag: **17.08.84**

(54) Fernsehempfänger mit Schaltungsanordnung zur Entschlüsselung eines analogen verschlüsselten Signals.

(30) Priorität: **30.11.83 DE 3343307**

(43) Veröffentlichungstag der Anmeldung:
**12.06.85 Patentblatt 85/24**

(45) Bekanntmachung des Hinweises auf die Patenterteilung:
**07.02.90 Patentblatt 90/06**

㊿ Bennante Vertragsstaaten:
**DE FR GB IT NL**

(56) Entgegenhaltungen:
**GB-A-1 157 870**
**GB-A-1 590 579**
**US-A-4 163 254**
**US-A-4 318 125**

(73) Patentinhaber: **Blaupunkt-Werke GmbH**
**Robert-Bosch-Strasse 200**
**D-3200 Hildesheim (DE)**

(72) Erfinder: **Krüger, Eckhard H., Dr.**
**Hinterm Kirchdorf**
**D-3201 Sorsum (DE)**

(74) Vertreter: **Eilers, Norbert, Dipl.-Phys.**
**Blaupunkt-Werke GmbH Robert-Bosch-Strasse 200**
**D-3200 Hildesheim (DE)**

EP 0 143 896 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBERGRAF, STOCKHOLM 1990

**Beschreibung**

Die Erfindung betrifft einen Fernsehempfänger, der im Oberbegriff des Anspruchs 1 definierten Art. Fernsehempfänger dieser Art kommt in letzter Zeit eine erhebliche Bedeutung zu und zwar insbesondere beim Kabelfernsehen. Bekanntlich wird durch das Kabelfernsehen die Möglichkeit geschaffen, neben den Programmen der öffentlich-rechtlichen Rundfunk- und Fernsehanstalten – hierfür zahlt der Benutzer eines Fernsehempfängers die üblichen Gebühren – eine Vielzahl zusätzlicher Programme zu empfangen. Mittels breitbandiger Kabel kann diese Vielzahl von Programmen den Teilnehmern zur Verfügung gestellt werden. Es ist bekannt, auf diesem Breitbandkabel zusätzliche gebührenpflichtige Programme in verschlüsselter Form zu übertragen mit der Folge, daß diese Programme von einem normalen Fernsehempfänger zwar empfangen werden können, die Bild- und Tonwiedergabe aber wegen der Verschlüsselung für den Teilnehmer nicht zu verwerten ist. Erst durch ein Zusatzgerät zur Entschlüsselung ("Descrambler"), welches dem Teilnehmer am erweiterten Programmangebot zur Verfügung gestellt wird, können die zusätzlichen Programme einwandfrei empfangen werden.

Um eventuelle Mißbräuche vorzubeugen, sollte die Verschlüsselung einen solchen "Schwierigkeitsgrad" besitzen, daß es für Unbefugte nicht möglich ist, die für einen einwandfreien Empfang erforderliche Entschlüsselung ohne weiteres – also ohne das erwähnte Zusatzgerät – vorzunehmen. Zur Verschlüsselung von analogen Fernsehsignalen ist schon vorgeschlagen worden, die Synchronimpulse von dem Fernsehsignal abzutrennen und über einen separaten Kanal getrennt zu übertragen. Auf der Empfängerseite werden die getrennten Synchronsignale nur den Teilnehmern an dem erweiterten Programmangebot zugeführt, so daß ein Nichtteilnehmer lediglich das Fernsehsignal ohne die Synchronimpulse empfangen würde, womit aber keine Bilddarstellung möglich ist. Aus der GB-A-1 590 579 ist es bekannt, ein als analoges Signal vorhandene Kamera- oder Recorder-Ausgangssignal zu digitalisieren und dann in einem Vollbildspeicher abzuspeichern. Aus diesem Bildspeicher wird das Signal wieder ausgelesen und in das analoge Signal zurückverwandelt. Mit Hilfe eines Scramblers werden beim Einschreiben die Speicherzellen, in denen das jeweilige digitale Wort für den einzelnen Bildpunkt eingeschrieben wird, gegenüber einem normalen zeilenweisen Einschreiben abgeändert. Das Code-Wort für den Scrambler ist in einem ROM festgelegt, über den auch der Empfänger verfügt. Bei einer Code-Änderung müssen jeweils beide ROM ausgetauscht werden. Eine Übertragung des Code-Worts für den Scrambler ist hier nicht vorgesehen.

Dieses Prinzip der Übertragung der Entschlüsselungsvorschrift in der Vertikal-Austastlücke des Fernsehsignals ist dagegen aus dem US-Patent US-A-4 163 254 bekannt.

Der Erfindung lag die Aufgabe zugrunde, einen Aufbau für einen Fernsehempfänger nach dem eben genannten Prinzip anzugeben, der einfach realisiert werden kann.

Diese Aufgabe wird durch die kennzeichnenden Merkmale des Patentanspruchs 1 gelöst.

Vorteilhafte Weiterbildungen und Ausgestaltungen der Erfindung sind in den Unteransprüchen angegeben und in der Zeichnung dargestellt.

Nachfolgend wird die Erfindung zum besseren Verständnis anhand der in der Zeichnung dargestellten Ausführungsbeispiele näher erläutert. Es zeigen:

- Fig. 1 das Blockschaltbild einer Schaltungsanordnung zur Verschlüsselung des Ton- und FBAS-Signals eines Fernsehsignals,
- Fig. 2 und 3 jeweils eine graphische Darstellung zur Erläuterung der Umwandlung eines analogen Signales in ein digitales Signal,
- Fig. 4 das Blockschaltbild einer Schaltungsanordnung zur Entschlüsselung eines Fernsehsignales,
- Fig. 5 ein weiteres Blockschaltbild einer Schaltungsanordnung zur Entschlüsselung eines Fernsehsignals,
- Fig. 6 eine digitale Entschlüsselungsschaltung,
- Fig. 7 eine Wahrheitstabelle zur Erläuterung der Schaltung gemäß Fig. 6,
- Fig. 8 eine weitere Verschlüsselungsschaltung,
- Fig. 9 eine Tabelle zur Erläuterung der Schaltung gemäß Fig. 8,
- Fig. 10 eine digitale Ton-Entschlüsselungsschaltung,
- Fig. 11 eine Wahrheitstabelle für die Schaltung gemäß Fig. 10, und
- Fig. 12 und 13 zwei Impulsdiagramme.

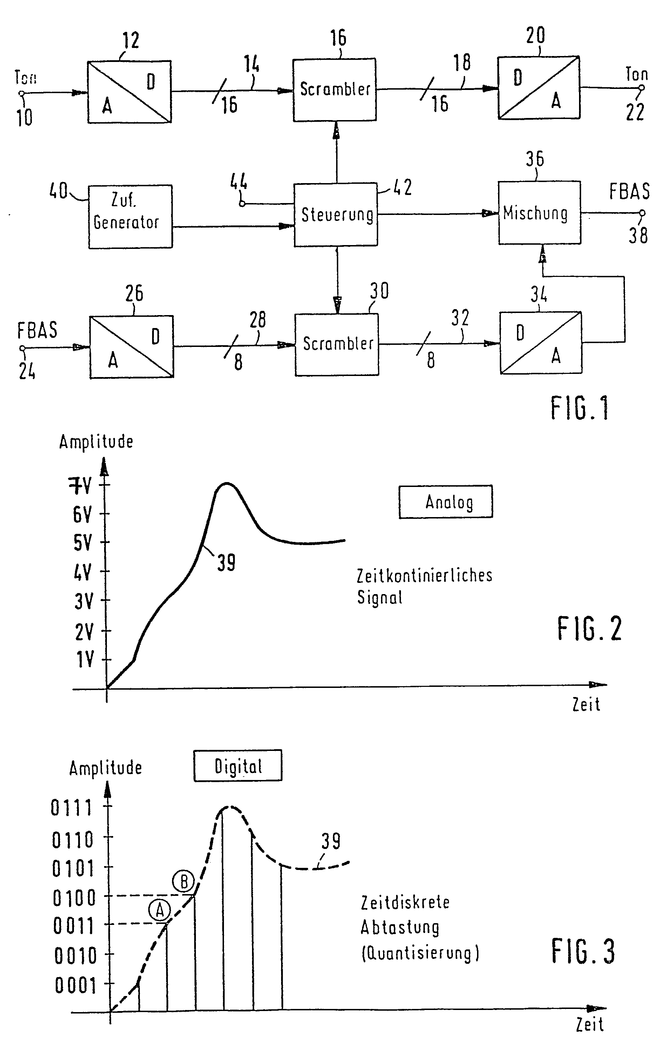

In dem Ausführungsbeispiel gemäß Fig. 1 wird davon ausgegangen, ein Fernsehsignal, welches sich aus einem Ton- und FBAS-Signal zusammensetzt, auf der Senderseite zu verschlüsseln. Die entsprechende Schaltungsanordnung ist dabei in den Ton- und FBAS-Signalweg an einer beliebigen Stelle – aber vor dem Sender – eingeschleift.

Die Schaltungsanordnung besitzt zwei Eingangsklemmen 10 und 24. An der Eingangsklemme 10 liegt das analoge Tonsignal, welches zu einem Analog-Digital-Wandler 12 geführt wird. Um eine hohe Auflösung des Tonsignales zu erzielen, welche eine Studioqualität des Tones gewährleistet, wird ein 16-Bit-Wandler eingesetzt, so daß das umgesetzte analoge Tonsignal am Ausgang des Analog-Digital-Wandlers in digitaler Form an insgesamt 16 Ausgängen zur Verfügung steht. Die Verbindung 14, welche zu einer logischen Verschlüsselungsschaltung 16 führt, umfaßt daher 16 einzelne Leitungen.

Erst nach der Umwandlung des analogen Tonsignals in digitale Signale erfolgt also die angestrebte Verschlüsselung in der ersten Verschlüsselungsschaltung 16. Die verschlüsselten digitalen Signale werden über eine Verbindung 18, welche ebenfalls 16 einzelne Leitungen umfaßt, zu einem ersten Digital-Analog-Wandler 20 geführt, und an der Ausgangsklemme 22 steht somit ein verschlüsseltes analoges Tonsignal zur Verfügung.

Ähnlich erfolgt auch die Verarbeitung bzw. Verschlüsselung des an der Eingangsklemme 24 liegenden FBAS-Signals, welches einem zweiten Analog-Digital-Wandler 26 zugeführt wird. Es hat sich gezeigt, daß hier eine 7-Bit oder 8-Bit-Auflösung genügt. Die Verbindung 28 umfaßt in Fig. 1 8 Leitungen (8-Bit-Auflösung). Nach der Verschlüsselung werden die digitalen Signale über eine Verbindung 32 dem zweiten Digital-Analog-Wandler 34 zur Umsetzung in ein verschlüsseltes analoges Signal zugeführt. Das analoge Signal gelangt zu einem Zeileneinmischer 36, welcher mit der Ausgangsklemme 38 verbunden ist, an der das verschlüsselte analoge FBAS-Signal zur Verfügung steht.

Die erste Verschlüsselungsschaltung 16 und die zweite Verschlüsselungsschaltung 30 werden gemeinsam von einer zentralen Steuerschaltung 42 angesteuert, welche einen Algorithmus (Verschlüsselungsvorschrift) liefert, nach dessen Maßgabe die Verschlüsselung in den Verschlüsselungsschaltungen 16 und 30 erfolgt. Über eine Eingangsklemme 44 werden der Steuerschaltung 42 die Synchronimpulse des Fernsehsignals zugeführt, und außerdem ist die Steuerschaltung 42 mit einem Zufallsgenerator 40 verbunden. Letzterer bewirkt, daß die Verschlüsselungsvorschrift nach einem Zufallskriterium verändert wird, so daß es keine "feste Regel" für die Verschlüsselung gibt. Eine anschließende Entschlüsselung zum Zwecke einer widerrechtlichen Benutzung des erweiterten Programmangebotes beim Kabelfernsehen ist daher praktisch unmöglich.

Damit auf der Empfängerseite für die berechtigten Teilnehmer eine Entschlüsselung möglich ist, muß die Verschlüsselungsvorschrift der Steuerschaltung 42 natürlich zur Verfügung stehen, deshalb wird die Verschlüsselungsvorschrift in Form digitaler Signale in einer Datenzeile in der vertikalen Austastlücke des Fernsehsignals untergebracht, wozu der schon erwähnte Zeileneinmischer 36 dient. Das FBAS-Signal an der Ausgangsklemme 38 umfaßt also auch die Verschlüsselungsvorschrift. Von den Ausgangsklemmen 22 und 38 kann das Fernsehsignal einem Sender zugeführt werden, um eine Einspeisung in ein breitbandiges Kabel vorzunehmen.

Es sei noch erwähnt, daß das Einmischen digitaler Signale in eine Datenzeile in der vertikalen Austastlücke an sich bekannt ist und beispielsweise beim Video-Text (oder beim ZPS-System) angewandt wird, so daß sich eine nähere Erläuterung des Zeileneinmischers 36 erübrigt.

Die Fig. 2 und 3 sollen das Prinzip der Arbeitsweise eines Analog-Digital-Wandlers verdeutlichen. Ein analoges Signal 39 gemäß Fig. 2 wird zu bestimmten Zeiten diskret abgetastet, und die sich dabei ergebenden jeweiligen Werte werden in digitaler Form dargestellt.

In Fig. 3 beträgt der Wert bei A z. B. 3 V, in digitaler Darstellung also "0011"; entsprechend ist bei B (4 V) das digitale Signal "0100" vorhanden.

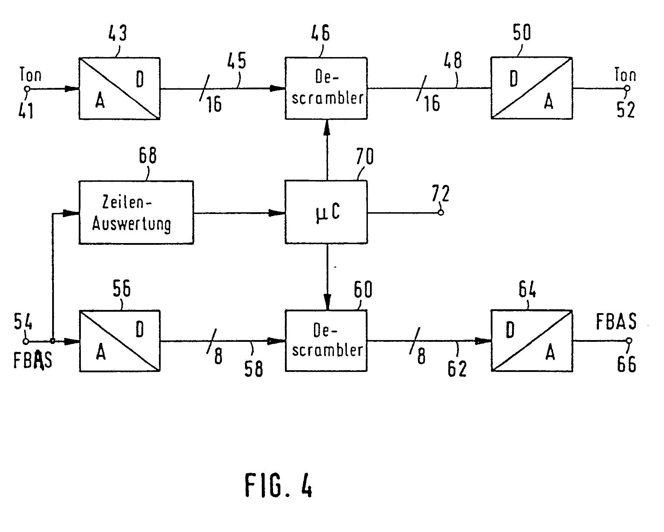

Mit der in Fig. 4 gezeigten Schaltungsanordnung ist es für den Teilnehmer am Kabelfernsehen möglich, das an den Eingangsklemmen 41 und 54 anstehende verschlüsselte Fernsehsignal zu entschlüsseln, um eine einwandfreie Bild- und Tonwiedergabe zu erreichen.

Das verschlüsselte analoge Tonsignal wird zunächst mittels eines dritten Analog-Digital-Wandlers 43 in ein digitales Signal umgewandelt, welches über eine Verbindung 45 – mit 16 Einzelleitungen – zu einer ersten logischen Entschlüsselungsschaltung 46 gelangt. Dort wird das zugeführte Bit-Muster entschlüsselt, so daß über die Verbindung 48 das entschlüsselte digitale Signal zu einem dritten Digital-Analog-Wandler 50 gelangt, an dessen Ausgangsklemme 52 das entschlüsselte analoge Tonsignal zur Verfügung steht.

In entsprechender Weise erfolgt die Entschlüsselung des FBAS-Signals mittels einer zweiten Entschlüsselungsschaltung 60, nachdem zuvor durch einen vierten Analog-Digital-Wandler 56 eine Umsetzung in digitale Signale vorgenommen worden und die Signale über eine Verbindung 58 der Entschlüsselungsschaltung 60 zugeführt worden sind.

Nach der in der Digitalebene erfolgten Entschlüsselung werden die digitalen Signale über eine Verbindung 62 zu einem vierten Digital-Analog-Wandler 64 geführt, an dessen Ausgangsklemme 66 das analoge entschlüsselte FBAS-Signal zur weiteren Verarbeitung zur Verfügung steht.

Die Entschlüsselung setzt natürlich die Kenntnis der Verschlüsselungsvorschrift voraus, welche in einer Datenzeile in der vertikalen Austastlücke enthalten ist. Daher wird das FBAS-Signal von der Eingangsklemme 54 zu einer Zeilenausworteschaltung 68 geführt, welche diejenige Zeile auswertet, in der die Verschlüsselungsvorschrift enthalten ist. Diese Verschlüsselungsvorschrift wird einem Mikroprozessor 70 zugeführt, welcher die Entschlüsselungsvorschrift liefert und die beiden Entschlüsselungsschaltungen 46 und 60 ansteuert. Außerdem erzeugt der Mikroprozessor 70 an seiner Ausgangsklemme 72 noch ein Rückmeldesignal, aufgrund dessen sich die Gebühren berechnen lassen, wenn der Teilnehmer von dem zusätzlichen Programmangebot Gebrauch macht.

Da bei den soweit beschriebenen Schaltungsanordnungen sowohl die Verschlüsselung als auch die Entschlüsselung in einer digitalen Ebene erfolgt, läßt sich das erfindungsgemäße Verfahren ohne Qualitätsverlust durchführen. Außerdem wird eine hohe Sicherheit erzielt; gleichwohl lassen sich die digitalen Signale recht einfach verschlüsseln. Da nach der Verschlüsselung jeweils wieder eine Umsetzung in analoge Signale erfolgt, ist das erfindungsgemäße Verfahren voll kompatibel. Die entsprechenden Schaltungen können an beliebiger Stelle in die Signalwege eingeschleift werden. Ferner verhindert das erfindungsgemäße Verfahren Qualitätseinbußen, die durch Übersprechen zwischen dem Video- und Audio-Kanal entstehen könnten.

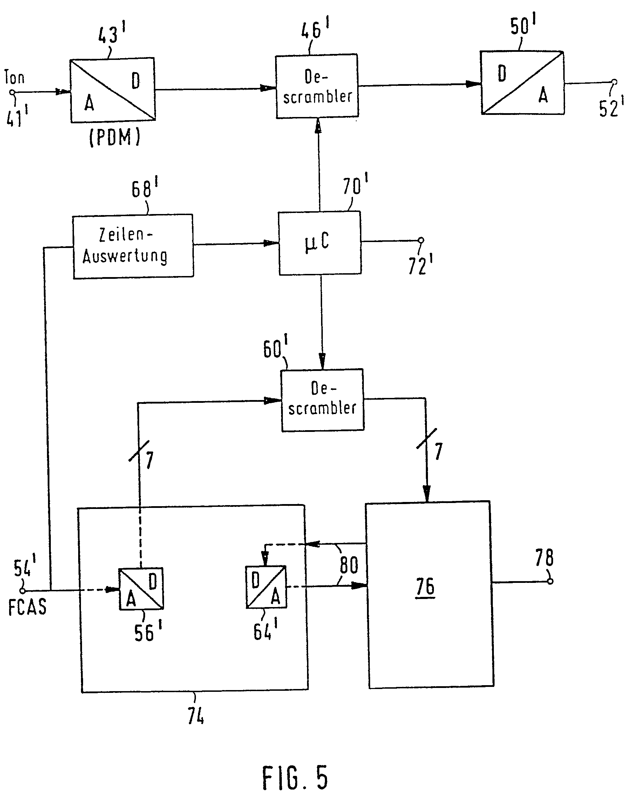

Eine andere vorteilhafte Ausführungsform der Erfindung, welche die empfängerseitige Entschlüsselung betrifft, ist in Fig. 5 dargestellt. Hier wird ein Fernsehempfänger vorausgesetzt, bei dem in an sich bekannter Weise eine digitale Signalverarbeitung erfolgt. Die Empfangsschaltung besitzt also bereits unter anderem einen Analog-Digital-Wandler 56' für das FBAS-Signal sowie einen Analog-Digital-Wandler 43' für das Tonsignal. Ferner sind in einer solchen an sich bekannten Empfangsschaltung auch schon Digital-Analog-Wandler vorhanden, die sich vorteilhaft bei der Erfindung mit verwenden lassen.

In der Schaltungsanordnung gemäß Fig. 5 sind für die erwähnte Digitalsignalverarbeitung eines bekannten Fernsehempfängers integrierte Schaltkreise 74 und 76 vorgesehen, die über eine schematisch angedeutete Verbindung 80 miteinander in Wechselwirkung stehen. An der Ausgangsklemme 78 kann ein analoges Ausgangssignal für die restliche Verarbeitung und zur anschließenden Ansteuerung einer Bildröhre entnommen werden. Ferner besitzt die bekannte Empfangsschaltung noch die beiden integrierten Schaltkreise 43' und 50' für den Tonsignalweg (in Fig. 4 ist nur ein Tonkanal dargestellt; die genannten integrierten Bausteine können aber auch zwei Kanäle für eine Stereo-Wiedergabe verarbeiten).

Folgende bekannte integrierte Schaltkreise können verwendet werden: MAA 2100 für den Schaltkreis 74, MAA 2200 für den Schaltkreis 76, MAA 2300 für den Schaltkreis 43' und MAA 2400 für den Schaltkreis 50'. Bei der Analog-Digital-Wandlung des FBAS-Signals wird hier übrigens mit einer 7-Bit-Auflösung gearbeitet.

Eine Besonderheit bei der Schaltungsanordnung gemäß Fig. 5 besteht darin, daß es sich bei dem Analog-Digital-Wandler 43' um einen Puls-Dichte-Modulator handelt, der – ebenso wie der Demodulator bzw. Digital-Analog-Wandler 50' – von einem nicht dargestellten zentralen Mikroprozessor angesteuert wird.

Daher ist für die Entschlüsselungsschaltung 46' eine andere, wenn auch sehr ähnliche Entschlüsselungsvorschrift als für die Entschlüsselungsschaltung 60' erforderlich. Es muß nämlich die vorher erfolgte Puls-Dichte-Modulation berücksichtigt werden. Die entsprechende Umwandlung der Entschlüsselungsvorschrift erfolgt in dem Mikroprozessor 70'. Am Ausgang der Entschlüsselungsschaltung 46' steht also ein entschlüsseltes digitales Signal zur Verfügung, welches man auch erhalten würde, wenn man das entschlüsselte analoge Tonsignal einer Puls-Dichte-Modulation unterwerfen würde. Nach Verarbeitung durch den Digital-Analog-Wandler 50' kann also an der Ausgangsklemme 52' das entschlüsselte analoge Tonsignal entnommen werden.

Beim FBAS-Signalweg wird für die Umwandlung des an der Eingangsklemme 54' befindliche FBAS-Signals in ein digitales Signal der innerhalb des integrierten Schaltkreises 74 schon vorhandene Analog-Digital-Wandler 56' ausgenutzt. Die digitalen Signale gelangen zur Entschlüsselungsschaltung 60', die von dem Mikroprozessor 70' angesteuert wird, und von dessen Ausgang die entschlüsselten digitalen Signale zum integrierten Schaltkreis 76 geführt werden. Letzterer wirkt – wie schon erwähnt – mit dem integrierten Schaltkreis 74 zusammen, der bereits einen Digital-Analog-Wandler 64' besitzt und somit ein analoges FBAS-Signal für die weitere Signalverarbeitung liefert.

Zur erwähnen ist im Zusammenhang mit Fig. 5 noch die Zeilenausworteschaltung 68', die in ihrer Funktion der schon anhand von Fig. 4 erläuterten Zeilenausworteschaltung 68 entspricht. Der Mikroprozessor 70' besitzt ebenfalls eine Ausgangsklemme 72', an welchem ein Rückmeldesignal für die Gebührenberechnung entnommen werden kann.

Das Ausführungsbeispiel gemäß Fig. 5 ist besonders vorteilhaft, da an sich schon vorhandene Schaltungsteile der in einer Empfangsschaltung vorgesehenen integrierten Schaltungen mit ausgenutzt werden können, um das erfindungsgemäße Verfahren durchzuführen. Die Schnittstellen des Ton- und FBAS-Signals sind nämlich nach der Analog-Digital-Wandlung ohne weiteres zugänglich. Die Entschlüsselung läßt sich daher mit einem Zusatzgerät ("Descrambler") kostengünstig und wirtschaftlich auf der Empfangsseite gestalten.

Demgegenüber kann für die digitale Verschlüsselung auf der Senderseite ein technisch größerer Aufwand betrieben werden, auch wenn dadurch mehr Kosten entstehen. Die Schaltungsanordnung zur Verschlüsselung braucht nämlich nur einmal vorgesehen zu werden, während die Entschlüsselung mittels eines Zusatzgerätes auf der Empfängerseite für jeden einzelnen Teilnehmer erforderlich ist. Daher steht hier die Wirtschaftlichkeit, die sich mit der Erfindung erzielen läßt, sehr wohl im Vordergrund, während dieser Gesichtspunkt auf der Senderseite nicht von so entscheidender Bedeutung ist.

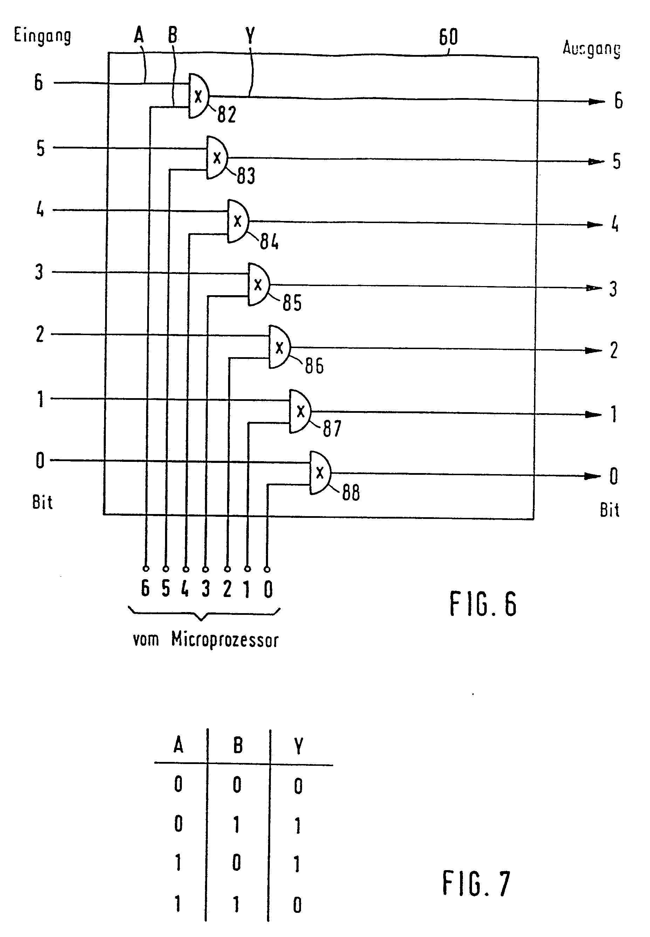

Nachfolgend werden als Beispiele einige digitale Entschlüsselungsschaltungen näher beschrieben. Die in Fig. 6 gezeigte Entschlüsselungsschaltung 60 kann zur Entschlüsselung des FBAS-Signals in Fig. 4 verwendet werden, mit der Maßgabe, daß hier sieben Quantisierungsstufen zugrunde gelegt sind.

Auf jeder der sieben Eingangsleitungen (0 – 6) werden der Entschlüsselungsschaltung 60 einzelne Bits zugeführt, wobei jede Leitung mit je einem Eingang A eines Exklusiv-ODER-Gatters 82 bis 88 verbunden ist. Die jeweils zweiten Eingänge B der Exklusiv-ODER-Gatter 82 bis 88 sind vom Mikroprozessor 70 (vgl. Fig. 4) zur Ansteuerung mit digitalen Signalen beaufschlagt, und die Ausgangsleitungen Y der Exklusiv-ODER-Gatter 82 bis 88 führen zum Digital-Analog-Wandler 64 in Fig. 4.

Die Wahrheitstabelle eines Exklusiv-ODER-Gatters zeigt in Fig. 7, daß das digitale Signal am Ausgang Y immer dann gleich dem digitalen Signal am Eingang A ist, wenn das Steuersignal am Eingang B eine "0" ist. Bei einer "1" am Steuereingang B wird das Eingangssignal jeweils invertiert.

Auf der Grundlage dieser Arbeitsweise eines Exklusiv-ODER-Gatters kann in Fig. 6 eine Entschlüsselung der digitalen Signale vorgenommen werden, und selbstverständlich erfolgt die Verschlüsselung in entsprechender Weise.

Wenn beispielsweise von dem Mikroprozessor 70 alle sieben Steuerleitungen mit den Steuerbits "0" angesteuert werden, sind die Signale am Eingang und am Ausgang der Entschlüsselungsschaltung 60 gleich. In einem weiteren Beispiel sei die nachfolgende Belegung der sieben Eingangsleitungen mit digitalen Signalen angenommen:

(A)      6 5 4 3 2 1 0

Eingang 1 0 1 1 0 0 1

Aufgrund der zuvor beschriebenen Wirkungsweise ergibt sich dann auf den Ausgangsleitungen folgende Aufschlüsselung der Eingangssignale, wenn die gezeigten Steuerbits verwendet werden:

Steuerbits  1 0 1 0 0 1 1

Ausgang    0 0 0 1 0 1 0

Für die Exklusiv-ODER-Gatter 82 bis 88 kann der Typ "74 LS 86" verwendet werden.

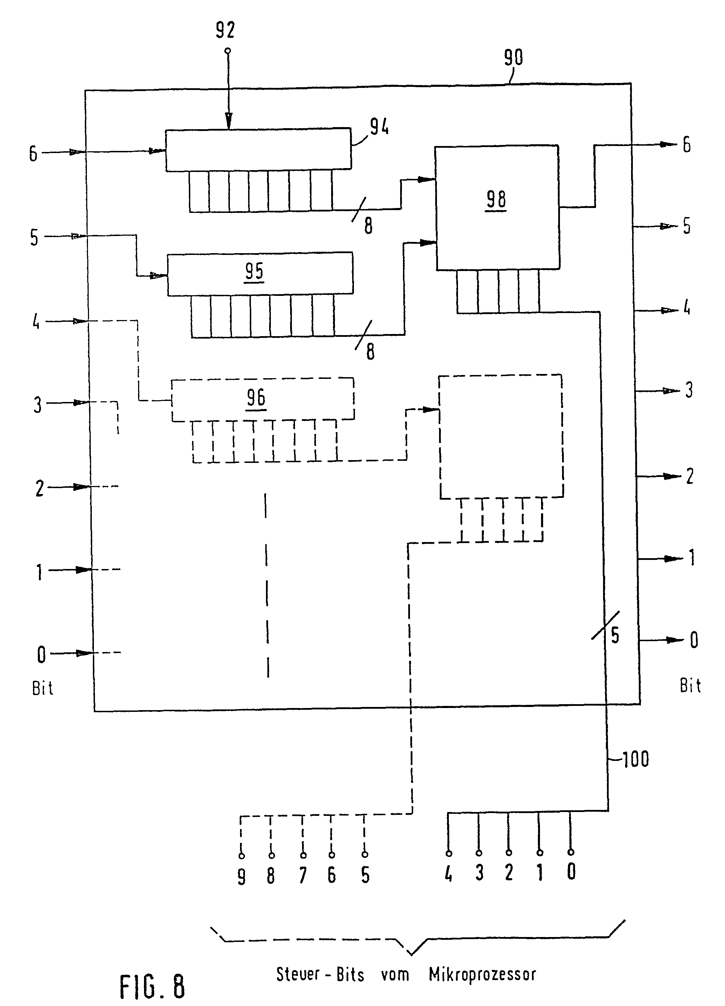

Die in Fig. 8 gezeigte digitale Entschlüsselungsschaltung besitzt für jeden der sieben Eingänge ein Schieberegister mit seriellem Eingang und parallelem Ausgang, wobei in Fig. 8 aus Gründen der Übersichtlichkeit der Zeichnung nur drei Schieberegister 94, 95 und 96 dargestellt sind (z. B. "SN 74164"). Über einen Taktimpulseingang 92 erfolgt die Clock-Steuerung in an sich bekannter Weise. Die acht parallelen Ausgangsleitungen jeweils zweier Schieberegister 94 und 95 führen zu einem gemeinsamen Demultiplexer 98 (z. B. SN 74150). Im vorliegenden Fall sind also insgesamt vier Demultiplexer erforderlich.

Die parallelen Steuereingänge der Demultiplexer 98 werden über die Steuereingangsleitungen 100 vom Mikroprozessor angesteuert, um die Eingangssignale zu entschlüsseln.

Das Schieberegister 94 bewirkt je Taktimpuls eine Verzögerung von etwa 50 Nanosekunden; es sind also maximal 400 Nanosekunden (8 x 50) Verzögerungszeit wählbar.

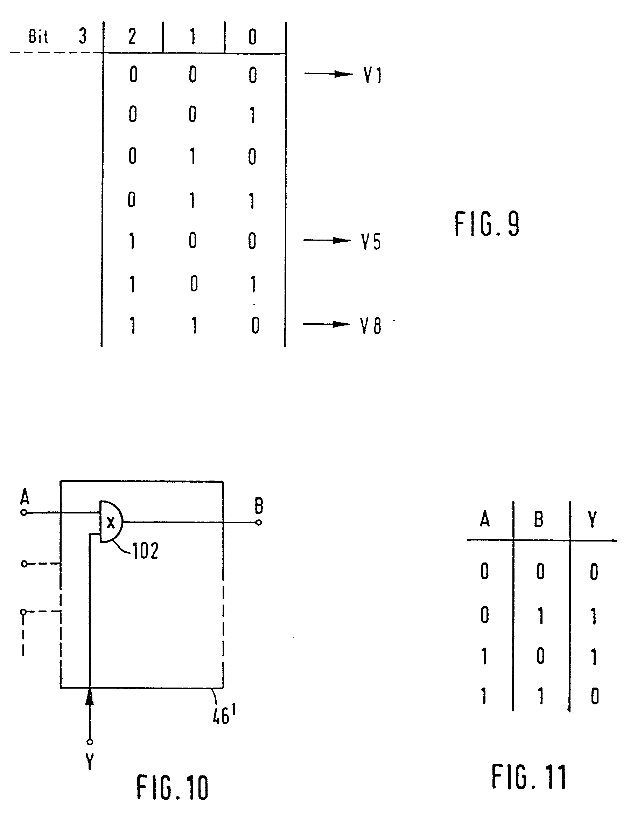

Mit beispielsweise 3 Bit bestehen 8 Möglichkeiten ($2^3$) zur Anwahl von 8 verschiedenen Verzögerungszeiten, wie die Tabelle in Fig. 9 verdeutlicht. Durch den Pfeil V1 soll dargestellt werden, daß bei Belegung mit den Steuerbits "0 0 0" die Verzögerung einem Taktimpuls entspricht. Bei V5 beträgt die Verzögerung 5 Taktimpulse, und

bei V8 ergibt sich eine Verzögerung von 8 Taktimpulsen.

Anhand von Fig. 10 – 13 wird noch das Ausführungsbeispiel einer digitalen Entschlüsselungsschaltung 46' erläutert, die im Blockschaltbild gemäß Fig. 5 zur Entschlüsselung des Puls-Dichte-modulierten Tonsignals vorgesehen ist.

Jede Eingangsleitung A führt zu je einem Exklusiv-ODER-Gatter 102, wobei in Fig. 10 aus Gründen der Übersichtlichkeit nur ein einziges Gatter dargestellt ist. Die zugehörige Wahrheitstabelle des Exklusiv-ODER-Gatters 102 ist in Fig. 11 gezeigt, welche die Ausgangssignale B in Abhängigkeit der vom Mikroprozessor 70' kommenden Steuersignale Y angibt.

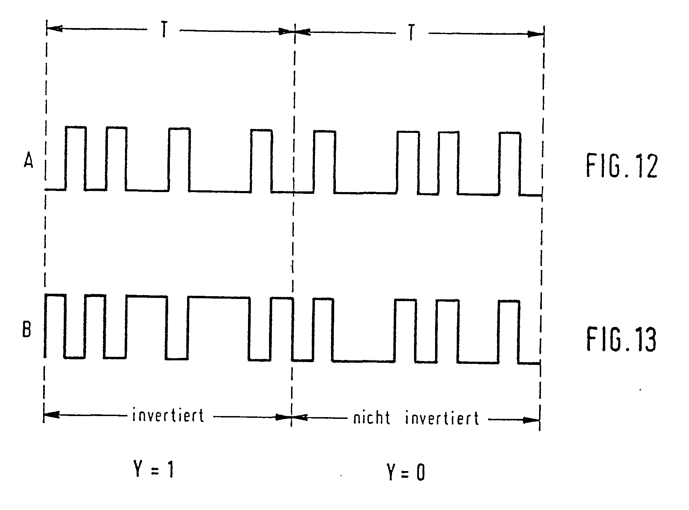

Die beiden Impulsdiagramme in Fig. 12 und 13 verdeutlichen an einem Beispiel die Wirkungsweise der Entschlüsselungsschaltung 46'. Die an dem Eingang A liegende Signalfolge wird taktweise beeinflußt, wie durch die beiden gleichen Zeitintervalle T angedeutet ist.

Gemäß der Wahrheitstabelle sind Eingangs- und Ausgangssignal einander gleich, wenn an dem Steuereingang Y eine "0" liegt. Bei einer "1" wird das Eingangssignal invertiert.

Nach dieser Vorschrift ergibt sich im ersten Zeitintervall T in Fig. 13 ein Ausgangssignal, welches dem invertierten Eingangssignal entspricht, während im folgenden Zeitintervall T Eingangs- und Ausgangssignal übereinstimmen. Wenn zuvor senderseitig die Verschlüsselung in entsprechender Weise erfolgte, kann somit eine Entschlüsselung der digitalen Signale erfolgen, wobei in dem speziellen Ausführungsbeispiel gemäß Fig. 5 noch zu berücksichtigen ist, daß das verschlüsselte digitale Signal ein Puls-Dichtemoduliertes Signal ist.

Das Invertieren der digitalen Signale innerhalb bestimmter Zeitabschnitte eignet sich auch vorzüglich zum Verschlüsseln und Entschlüsseln des FBAS-Signals. So ist es möglich, eine entsprechende Entschlüsselung zu einem nicht verwertbaren Bild führt. Es können auch mehrere Gruppen von Zeilen zusammengefaßt werden, die dann invertiert oder nicht invertiert werden.

Die in Fig. 12 gezeigten Zeitintervalle T können in vorteilhafter Weise von der Vertikalfrequenz (50 Hz) oder von der Zeilenfrequenz abgeleitet werden.

Die digitale Verschlüsselung und Entschlüsselung bzw. die hierfür benötigten digitalen Schaltungen ermöglichen es in vorteilhafter Weise, bestimmte Schaltungseinheiten zusammenzufassen. So ist es zweckmäßig, in den Fig. 4 und 5 die logischen Entschlüsselungsschaltungen 46 bzw. 46' und 60 bzw. 60' sowie den Mikroprozessor 70 bzw. 70' in einer Hybrid-Dickschichtschaltung zusammenzufassen. Dadurch wird eine erhöhte Sicherheit gegen eine unbefugte Benutzung bzw. gegen eine widerrechtliche Entschlüsselung erzielt, da die Steuerleitungen, die vom Mikroprozessor zu den Entschlüsselungsschaltungen führen, nicht zugänglich sind.

Für die bisher an Hand der Ausführungsbeispiele beschriebenen Mikroprozessoren kann

9

übrigens der Typ 6805 (Motorola) verwendung finden.

**Patentansprüche**

1. Fernsehempfänger mit einer Schaltungsanordnung zur Entschlüsselung eines analogen, aus verschlüsselten Ton- und FBAS-Signalen bestehenden Fernsehsignals, in dessen Vertikalaustastlücken die Entschlüsselungsvorschrift mit empfangen wird, dadurch gekennzeichnet, daß der Ausgang (54) des Bild-ZF-Demodulators mit einem Analog-Digitalwandler (56) und parallel dazu mit einer Zeilenauswertschaltung (68) mit einem nachgeschalteten Mikroprozessor (70) verbunden ist, daß jede Ausgangsleitung des Analog-Digitalwandlers an den ersten Eingang (A) und jede Ausgangsleitung des Mikroprozessors an den zweiten Eingang (B) eines zugeordneten, nachgeschalteten Exklusiv-Odertors (82 – 88) angeschlossen ist, und daß die Ausgangsleitungen (Y) der Exklusiv-Odertors (82 – 88) mit den Eingängen eines Digital-Analogwandlers (64) verbunden sind, dessen Ausgangsleitung auf den üblichen FBAS-Eingang (66) eines Fernsehempfängers geführt ist.

2. Fernsehempfänger mit einer Schaltungsanordnung zur Entschlüsselung eines analogen, aus verschlüsselten Ton- und FBAS-Signalen bestehenden Fernsehsignals, in dessen Vertikalaustastlücken die Entschlüsselungsvorschrift mit empfangen wird, dadurch gekennzeichnet, daß der Ausgang (54) des Bild-ZF-Demodulators mit einem Analog-Digitalwandler (56) und parallel dazu mit einer Zeilenauswertschaltung (68) mit einem nachgeschalteten Mikroprozessor (70) verbunden ist, daß jede Ausgangsleitung des Analog-Digitalwandlers auf den Eingang eines mehrstelligen Schieberegisters (94 – 96) geführt ist, daß die parallelen Ausgänge zweier benachbarter Schieberegister zu einem gemeinsamen Demultiplexer (98) geführt sind, dessen Steuereingänge mit den Ausgangsleitungen des Mikroprozessors (70) verbunden sind und daß die Ausgangsleitungen der Demultiplexer mit den Eingängen eines Digital-Analogwandlers verbunden sind, dessen Ausgangsleitungen auf den üblichen FBAS-Eingang (66) des Fernsehempfängers geführt sind.

3. Fernsehempfänger nach Anspruch 1 oder 2, dadurch gekennzeichnet, daß der dem Ausgang 54 des Bild-ZF-Demodulators nachgeschaltete Analog-Digitalwandler eine Auflösung von 7 Bit besitzt.

4. Fernsehempfänger nach einem der vorangegangenen Ansprüche, dadurch gekennzeichnet, daß der Ausgang (41) des Tondemodulators mit einem Analog-Digitalwandler (43) verbunden ist, diesem eine Entschlüsselungsschaltung (46) nachgeschaltet ist, deren Eingänge für das Entschlüsselungswort ebenfalls an die Ausgänge

10

des Mikroprozessors (70) angeschlossen sind, und daß die Ausgänge der Entschlüsselungsschaltung mit einem Digital-Analogwandler (50) verbunden sind, dessen Ausgang auf den Eingang des Tonkanals des Fernsehempfängers geführt ist.

**Claims**

1. Television receiver comprising a circuit for descrambling an analog television signal consisting of scrambled audio and composite video signals, in the vertical blanking intervals of which the descrambling rule is also received, characterized in that the output (54) of the video IF demodulator is connected to an analog/digital converter (56) and, in parallel thereto, to a line evaluating circuit (68) followed by a microprocessor (70), that each output line of the analog/digital converter is connected to the first input (A) and each output line of the microprocessor is connected to the second input (B) of an associated subsequent exclusive OR gate (82 – 88), and that the output lines (Y) of the exclusive OR gate (82 – 88) are connected to the inputs of a digital/analog converter (64), the output line of which is conducted to the conventional composite video input (66) of a television receiver.

2. Television receiver comprising a circuit arrangement for descrambling an analog television signal consisting of scrambled audio and composite video signals, in the vertical blanking intervals of which the descrambling rule is also received, characterized in that the output (54) of the video IF demodulator is connected to an analog/digital converter (56) and, parallel thereto, to a line evaluating circuit (68) with a subsequent microprocessor (70), that each output line of the analog digital converter is conducted to the input of a multi-position shift register (94 – 96), that the parallel outputs of two adjacent shift registers are conducted to a common demultiplexer (98), the control inputs of which are connected to the output lines of the microprocessor (70), and that the output lines of the demultiplexer are conducted to the inputs of a digital/analog converter, the output lines of which are connected to the conventional composite video input (66) of the television receiver.

3. Television receiver according to claim 1 or 2, characterized in that the analog/digital converter following the output 54 of the video IF demodulator has a resolution of 7 bits.

4. Television receiver according to one of the preceding claims, characterized in that the output of (41) of the audio demodulator is connected to an analog/digital converter (43) which is followed by a descrambling circuit (46), the inputs of which for the descrambling word are also connected to the outputs of the microprocessor (70), and that the outputs of the descrambling circuit are connected to a digital/analog converter (50) the output of which is conducted to the input of the audio channel of the television receiver.

## Revendications

1. Récepteur de télévision comportant un circuit pour décoder un signal vidéo analogique formé d'un signal son et d'un signal image FBAS, codés, signal vidéo dont les intervalles de détection verticale contiennent la prescription de décodage, récepteur caractérisé en ce que la sortie (54) du démodulateur FI, image est relié à un convertisseur analogique/numérique (56) et est relié en parallèle à un circuit d'exploitation de lignes (68) avec un microprocesseur (70), en ce que chaque ligne de sortie du convertisseur analogique/numérique est reliée à la première entrée (A) et chaque ligne de sortie du microprocesseur est reliée à la seconde entrée (B) d'une porte OU-EXCLUSIF (82 – 88) correspondante en aval, et en ce que les lignes de sortie (Y) des portes OU-EXCLUSIF (82 – 88) sont reliées aux entrées d'un convertisseur numérique/analogique (64) dont la ligne de sortie est appliquée à l'entrée FBAS (66) usuelle d'un récepteur de télévision.

2. Récepteur de télévision comportant un circuit de décodage d'un signal vidéo analogique formé de signaux son et de signaux image FBAS, codés, et dont les intervalles de détection verticale contiennent la prescription de décodage, caractérisé en ce que la sortie (54) du démodulateur d'image FI est reliée à un convertisseur analogique-numérique (56) et en parallèle à cela à un circuit d'exploitation de ligne (68) avec un microprocesseur (70) en aval, chaque ligne de sortie du convertisseur analogique/numérique étant appliquée à l'entrée d'un registre à décalage à plusieurs positions (94 – 96), en ce que les sorties parallèles de deux registres à décalage voisins sont reliés à un démultiplexeur commun (98) dont les entrées de commande sont reliées aux lignes de sortie du microprocesseur (70) et les lignes de sortie du démultiplexeur sont reliées aux entrées d'un convertisseur numérique/analogique dont les lignes de sortie sont appliquées à l'entrée image FBAS (66) habituelle du récepteur de télévision.

3. Récepteur de télévision selon la revendication 1 ou 2, caractérisé en ce que le convertisseur analogique/numérique en aval de la sortie (54) du démodulateur image FI a une résolution de 7 bits.

4. Récepteur de télévision selon l'une des revendications précédentes, caractérisé en ce que la sortie (41) du démodulateur son est reliée à un convertisseur analogique/numérique (43) suivi par un circuit décodage (46) dont les entrées pour le mot de décodage sont également reliées aux sorties du microprocesseur (70) et en ce que les sorties du circuit de décodage sont reliées à un convertisseur numérique-analogique (50) dont la sortie est reliée à l'entrée du canal son du récepteur de télévision.

FIG.1

Analog

Zeitkontinierliches
Signal

FIG.2

Digital

Zeitdiskrete
Abtastung
(Quantisierung)

FIG.3

FIG. 4

FIG. 5

Eingang

| | A | B | Y | 60 | Ausgang |

6 ⟶ [X] 82 ⟶ 6

5 ⟶ [X] 83 ⟶ 5

4 ⟶ [X] 84 ⟶ 4

3 ⟶ [X] 85 ⟶ 3

2 ⟶ [X] 86 ⟶ 2

1 ⟶ [X] 87 ⟶ 1

0 ⟶ [X] 88 ⟶ 0

Bit

Bit

6 5 4 3 2 1 0

vom Microprozessor

# FIG. 6

| A | B | Y |
|---|---|---|
| 0 | 0 | 0 |
| 0 | 1 | 1 |
| 1 | 0 | 1 |
| 1 | 1 | 0 |

# FIG. 7

7

FIG. 8

Steuer - Bits vom Mikroprozessor

| Bit | 3 | 2 | 1 | 0 | |
|---|---|---|---|---|---|
| | | 0 | 0 | 0 | → V1 |
| | | 0 | 0 | 1 | |
| | | 0 | 1 | 0 | |
| | | 0 | 1 | 1 | |
| | | 1 | 0 | 0 | → V5 |
| | | 1 | 0 | 1 | |
| | | 1 | 1 | 0 | → V8 |

FIG.9

FIG.10

| A | B | Y |
|---|---|---|
| 0 | 0 | 0 |
| 0 | 1 | 1 |
| 1 | 0 | 1 |
| 1 | 1 | 0 |

FIG. 11

11

FIG.12

FIG.13